# FASCICULE DE BREVET EUROPEEN

(11) **EP 1 489 517 B1**
(45) Date de publication et mention de la délivrance du brevet: **06.09.2006**
(21) Numéro de dépôt: 04300176.7
(22) Date de dépôt: 01.04.2004
(51) Int. Cl.: G06F 12/14, G06F 12/10, G06F 1/00

(54) **Protection d'un programme en attente d'exécution dans une mémoire utilisée par un microprocesseur**
Schutz eines auf ausführungwartenden Programms in einem Speicher für einen Mikroprozessor
Protection of a program waiting for execution in memory used by a microprocessor

(30) Priorité: 03.04.2003 FR 0304149
(43) Date de publication de la demande: 22.12.2004
(73) Titulaire: STMicroelectronics S.A., 92120 Montrouge (FR)
(72) Inventeur: Courcambeck, Stéphan, 13380 Plan de Cuques (FR); Anguille, Claude, 13320 Banc Bel Air (FR)
(74) Mandataire: de Beaumont, Michel

(56) Documents cités:
- G. E. SUH AND AL: "Hardware mechanisms for memory integrity checking" TECHNICAL REPORT MIT-LCS-TR-872, [Online] 18 novembre 2002 (2002-11-18), pages 1-18, XP002265630 Cambridge,USA Extrait de l'Internet: URL:http://www.lcs.mit.edu/publications/sp ecpub.php?id=1653> [extrait le 2003-12-12]
- GILMONT T ET AL: "Enhancing security in the memory management unit" EUROMICRO CONFERENCE, 1999. PROCEEDINGS. 25TH MILAN, ITALY 8-10 SEPT. 1999, LOS ALAMITOS, CA, USA,IEEE COMPUT. SOC, US, 8 septembre 1999 (1999-09-08), pages 449-456, XP010352217 ISBN: 0-7695-0321-7
- HUCK J ET AL: "ARCHITECTURAL SUPPORT FOR TRANSLATION TABLE MANAGEMENT IN LARGE ADDRESS SPACE MACHINES" PROCEEDINGS OF THE ANNUAL INTERNATIONAL SYMPOSIUM ON COMPUTER ARCHITECTURE. SAN DIEGO, MAY 16 - 19, 1993, LOS ALAMITOS, IEEE. COMP. SOC. PRESS, US, vol. SYMP. 20, 16 mai 1993 (1993-05-16), pages 39-50, XP000398985 ISBN: 0-8186-3810-9

## Description

La présente invention concerne le domaine des microprocesseurs et plus particulièrement les circuits multitâches capables d'exécuter, au moins de ce que voit l'utilisateur, plusieurs programmes simultanément. En pratique, une seule instruction d'un programme est traitée à chaque instant par une unité centrale de traitement mais plusieurs programmes ou tronçons de programme sont stockés dans une mémoire vive accessible par l'unité centrale qui transfère des lignes du programme à exécuter vers une mémoire cache qui lui est affectée.

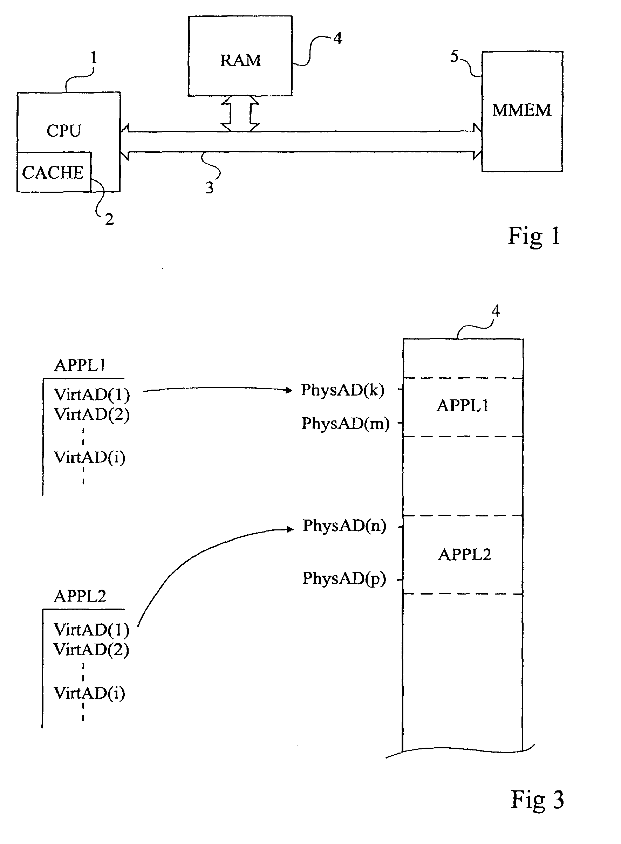

La figure 1 illustre, de façon très schématique et sous forme de blocs, un exemple d'architecture simplifiée du type auquel s'applique la présente invention. Une unité centrale de traitement 1 (CPU) équipée d'une mémoire cache 2 (CACHE) est connectée à un ou plusieurs bus 3 de communication (données, adresses, commandes) avec des éléments périphériques. Parmi ces éléments périphériques, une mémoire vive 4 (RAM) destinée à contenir les données (opérandes) des programmes en cours de traitement ainsi que les lignes de code de ces programmes (au moins par blocs) est connectée au bus 3. En pratique, les programmes contenus dans la mémoire 4 proviennent généralement d'une mémoire de masse 5 (MMEN), par exemple, un disque dur. Cette mémoire de masse contient les programmes susceptibles d'être exécutés par l'unité centrale ainsi que des données sauvegardées lorsque ces programmes ne sont pas en cours d'exécution. Bien entendu, plusieurs mémoires de masse (CDROM, disquette etc.) peuvent être connectées au bus 3.

Pour être capable d'exécuter plusieurs applications ou programmes différents stockés temporairement dans la mémoire 4, l'unité centrale 1 doit disposer d'une table de correspondance entre des adresses dites virtuelles du programme qui sont indépendantes de son lieu de stockage et des adresses dites physiques correspondant aux adresses physiques dans la mémoire, par exemple la mémoire 4, où sont stockées les différentes lignes du programme. Cette table de correspondance est généralement stockée dans des registres tampon et généralement désignée par son appellation anglo-saxonne TLB (Translation Look Aside Buffer).

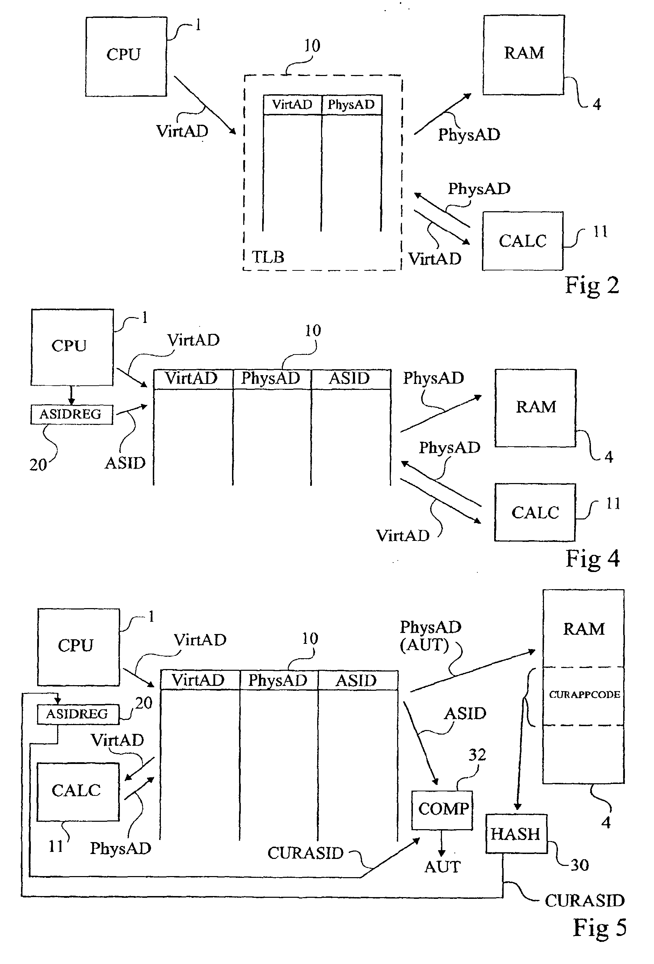

La figure 2 illustre, de façon très schématique et fonctionnelle, une table de correspondance 10 et les échanges entre la mémoire cache ou registre contenant cette table et les différents éléments y ayant recours.

Côté unité centrale de traitement 1, à chaque fois qu'une instruction d'un programme stocké dans la mémoire vive 4 doit être exécutée, l'appel de cette instruction s'effectue en utilisant l'adresse virtuelle VirtAD de cette instruction correspondant à l'adresse contenue dans le programme. Cette adresse virtuelle est convertie par la table 10 en une adresse physique PhysAD où se trouve cette instruction dans la mémoire vive 4. La mémoire 4 fournit alors l'instruction correspondante sur le bus (3, figure 1) à destination de l'unité centrale.

Si la table 10 ne contient pas la correspondance entre les deux adresses, l'unité centrale ou plus précisément un programme de calcul (bloc 11, CALC) de son système d'exploitation calcule une nouvelle ligne de correspondance entre adresse virtuelle et adresse physique, et l'inscrit dans la table 10.

A chaque fois qu'une application contenue dans la mémoire vive 4 doit être exécutée par l'unité centrale, le système d'exploitation prend la main et utilise ses structures internes pour calculer la table de correspondance pour le programme concerné.

La figure 3 illustre le fait que deux applications différentes APPL1 et APPL2 stockées dans la mémoire vive 4 à des adresses physiques différentes (PhysAD(k) à PhysAD(m) pour le premier programme et PhysAD(n) à PhysAD(p) pour le deuxième programme) se partagent des adresses virtuelles identiques (VirtAD(1), VirtAD(2), VirtAD (i), etc). A chaque fois qu'un programme passe en avant plan, c'est-à-dire en exécution par l'unité centrale 1 (le cas échéant après transfert dans la mémoire cache 2), sa table de correspondance 10 est utilisée pour convertir ses adresses virtuelles en adresses physiques dans la mémoire 4.

Pour des questions de sécurité dans le déroulement des programmes, il est important que deux adresses virtuelles identiques de deux applications différentes ne pointent pas vers la même adresse physique dans la mémoire 4. En effet, cela permet de protéger le code du programme ainsi que les données des applications entre elles. Par exemple, si une donnée sensible (quantité secrète, résultat secret, etc.) d'une première application est située dans une adresse physique comprise entre les adresses k et m dans la mémoire 4 alors qu'elle se voit attribuer une adresse virtuelle i, il ne faut surtout pas qu'une autre application puisse accéder à l'adresse physique correspondante en réutilisant l'adresse virtuelle i. Dans une architecture du type de celle de la figure 2, il faut réinitialiser la table de correspondance à chaque fois que l'on passe d'une application à une autre. Cela impose de recalculer la table de correspondance à chaque fois qu'une application passe en exécution de premier plan, c'est-à-dire qu'une de ses instructions doit être exécutée par l'unité centrale.

Un inconvénient évident est que cela prend du temps.

La figure 4 illustre, de façon très schématique, l'architecture d'une solution classique permettant d'éviter de recalculer la table de correspondance à chaque fois qu'une application passe en premier plan. Cette solution utilise un champ supplémentaire de la table 10 de correspondance qui contient, pour chaque ligne, un identifiant ASID de l'application en plus des adresses virtuelle et physique. Cela permet, en principe, d'éviter qu'une application utilise la correspondance d'une adresse physique d'une autre.

Pour la mise en oeuvre de cette solution, le circuit utilise un registre 20 (ASIDREG) contenant l'identifiant de l'application courante. Ce registre est un registre d'état de l'unité centrale 1.

Cette solution présente l'avantage par rapport à celle de la figure 2, de ne pas nécessiter de réinitialiser ou vider la table de correspondance à chaque fois que l'on change de tâche de premier plan.

Un inconvénient reste toutefois que c'est le système d'exploitation qui attribue les identifiants ASID aux différentes applications lorsqu'une application est chargée en mémoire vive pour exécution. La zone de mémoire vive 4 allouée à une application suspendue (en arrière plan) devient par conséquent plus vulnérable à des attaques éventuelles. En effet, à partir du moment où la table de correspondance n'est pas intégralement recalculée lorsque l'application passe en premier plan, il est possible de remplacer la mémoire vive par un émulateur, ou de modifier les signaux sur le bus 3, afin de modifier un code opératoire d'une application en arrière plan et y insérer une instruction pirate (type virus ou "cheval de Troie"). Par suite, lorsque l'application repasse en premier plan, elle pourra alors accéder aux adresses physiques restées présentes dans la table de correspondance lors de l'exécution précédente de l'application (avant qu'elle soit modifiée).

Cette vulnérabilité d'une application en arrière-plan est accrue par le fait qu'il n'est pas nécessaire d'être synchrone avec l'unité centrale pour modifier les lignes de cette mémoire.

Un problème similaire se pose pour la mémoire de masse 5 lorsque le programme n'est pas chargé intégralement en mémoire vive 4 et que son exécution requiert des appels à des lignes en données dans la mémoire de masse 5.

Le document "Hardware mechanisms for memory integrity checking" de G.E. SUH et al., Technical report MIT-LCS-TR-872, page 1-18 du 18/11/2002 (XP002265630) décrit un mécanisme de vérification de l'intégrité d'une mémoire dans des applications multitâches exploitant une table de correspondance entre des adresses virtuelles des lignes de différents programmes et des adresses physiques de ces lignes dans une mémoire vive.

Les documents "Enhancing security in the memory management unit" de T Gilmont et al., conférence EUROMICRO, 1999, proceedings 25th Milan, Italy 8-10 sept 1999, Los Alamitos, CA, USA IEEE Comput. Soc. Press, US, 8 septembre 1999, page 449-456 (XP010352217), et "Architectural support for transation table management in large address space machines" de J. Huck et al., proceedings of the Annual International Symposium on Computer Architecture, San Diego, May 16-19 1993, Los Alamitos, IEEE Comput. Soc Press, US, vol Symp.20, du 16/05/93, pages 39-50 (XP000398985), décrivent des systèmes d'exploitation d'une mémoire avec une traduction d'adresses physiques en adresses virtuelles et concernent le domaine des TLB.

La présente invention vise à proposer un procédé d'autorisation d'accès à une table de correspondance qui pallie les inconvénients des solutions connues. En particulier, l'invention vise à éviter un recalcul systématique d'une table de correspondance à chaque chargement en premier plan d'une application à exécuter, sans pour autant rendre celle-ci vulnérable lorsqu'elle est en arrière plan dans une mémoire vive.

L'invention vise également à proposer une solution qui soit compatible avec les utilisations classiques des tables de correspondance.

Pour atteindre ces objets et d'autres, la présente invention prévoit un procédé d'autorisation d'accès à une table de correspondance d'adresses tel que définit à la revendication 1.

Selon un mode de mise en oeuvre de la présente invention, ladite signature est calculée par la mise en oeuvre d'une fonction de Hash.

Selon un mode de mise en oeuvre de la présente invention, ladite mémoire est une mémoire vive dans laquelle sont chargées des lignes de programme depuis une mémoire de masse.

L'invention prévoit également un processeur d'exécution multitâches de plusieurs programmes tel que définit à la revendication 4.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
les figures 1 à 4 décrites précédemment sont destinées à exposer l'état de la technique et le problème posé ; et
la figure 5 représente, de façon très schématique et sous forme de blocs, un mode de réalisation d'une architecture de microprocesseur mettant en oeuvre le procédé d'autorisation d'accès d'une table de correspondance selon l'invention.

Les mêmes éléments ont été désignés par les mêmes références aux différentes figures. Pour des raisons de clarté, seuls les étapes de procédé et les éléments du processeur qui sont nécessaires à l'exposé de l'invention ont été représentés aux figures et seront décrits par la suite. En particulier, le calcul de la table de correspondance en elle-même n'a pas été détaillé et ne fait pas l'objet de la présente invention, celle-ci pouvant être mise en oeuvre avec les outils de calcul utilisés classiquement.

Une caractéristique de la présente invention est de calculer, à chaque changement de contexte (passage en avant plan d'une nouvelle application), l'identifiant de l'application au moyen d'un algorithme exécutant une fonction de Hash ou analogue calculant une signature d'au moins une partie du code de l'application stocké en mémoire vive et/ou en mémoire de masse.

Une autre caractéristique de l'invention est de vérifier la conformité de cette signature courante calculée, par rapport à une signature de référence calculée précédemment et enregistrée dans la table de correspondance. Le calcul de la signature de référence s'effectue à chaque calcul d'une nouvelle correspondance entre une adresse virtuelle et une adresse physique. Cette signature reste toutefois toujours la même pour une même application.

La figure 5 illustre, de façon très schématique et sous forme de blocs, un mode de mise en oeuvre de la présente invention. La représentation de la figure 5 expose principalement les liaisons fonctionnelles entre les différents éléments.

L'invention exploite une architecture du type de celle décrite précédemment en relation avec la figure 4, c'est-à-dire exploitant un identifiant ASID de l'application ou programme associé à chaque ligne de correspondance de la table 10 entre une adresse virtuelle VirtAD et une adresse PhysAD physique. Toujours comme précédemment, cette table de correspondance 10 sert à convertir des adresses virtuelles d'une application requise par une unité centrale de traitement 1 (CPU) pourvue d'un registre 20 d'identifiant d'application (ASIDREG), en une adresse physique PhysAD d'une mémoire vive 4 dans laquelle est stockée l'application concernée. L'unité centrale de traitement comporte des moyens matériels ou logiciels (bloc 11, CALC) pour faire calculer, par son système d'exploitation, les adresses physiques soit au chargement d'une application soit lorsqu'une adresse virtuelle est appelée pour la première fois.

Selon la présente invention, à chaque fois qu'une application (par exemple, un programme ou un sous-programme) contenu dans la mémoire 4 (ou dans une mémoire de masse non représentée) doit passer en premier plan, c'est-à-dire qu'au moins une de ses instructions doit être exécutée par l'unité centrale 1, on calcule une signature (bloc 30, HASH) d'au moins une partie des lignes du programme stocké dans la mémoire 4. Cette signature fournit un identifiant d'application courant (CURASID) stocké dans le registre 20. Le contenu de ce registre 20 est alors comparé (bloc 32, COMP) à l'identifiant ASID stocké sur la ligne de la table 10 correspondant à l'application concernée que l'on veut utiliser. Le résultat de cette comparaison permet de vérifier que le code opératoire de l'application n'a pas été modifié dans la mémoire vive alors que cette application se trouvait en arrière plan. Le bloc de comparaison 32, qu'il soit matériel ou logiciel, fournit un signal d'autorisation ou d'authentification AUT à destination de l'unité centrale 1 pour entreprendre les mesures appropriées. En pratique, l'unité centrale n'exécutera, ou ne transférera dans sa mémoire cache pour exécution, les instructions du programme stocké dans la mémoire vive 4 que si le comparateur 32 a authentifié que le code opératoire n'a pas été modifié depuis son chargement en mémoire 4.

De préférence, le calcul de signature est effectué sur une partie fixe et significative du code du programme stocké en mémoire vive. Par partie fixe, on entend qu'il convient d'éviter les lignes contenant des données manipulées par le programme dont le contenu est donc susceptible de changer et de modifier la signature alors même qu'aucun piratage n'a eu lieu. Par significatif, on entend que plus le nombre de lignes du code pris en compte dans le calcul de signature est important, plus l'authentification sera robuste en terme d'efficacité. A titre d'exemple, on peut calculer la signature en prenant une ligne sur dix, une ligne sur vingt ou une ligne sur trente du code opératoire.

Un avantage de l'invention est qu'une modification du code opératoire d'un programme en arrière plan stocké dans une mémoire vive devient difficile dans la mesure où il faut modifier son code opératoire en respectant la signature dont l'algorithme de calcul est en principe inconnu. De préférence, pour garantir la sécurité du système et pour des raisons de rapidité, la fonction de Hash est exécutée de façon matérielle en circuit intégré.

L'application en cours d'exécution est forcément dans la mémoire cache du microprocesseur qui constitue une zone considérée comme intouchable pour un pirate. Ce n'est que lorsque l'application est en attente dans la mémoire vive qu'il existe un risque de piratage.

On notera que si l'intégralité d'un programme n'est pas transférée de la mémoire de masse (5, figure 1) vers la mémoire vive lors du chargement de l'application, le calcul de signature peut exploiter des lignes du programme encore présentes dans la mémoire de masse. Les modifications à ce qui a été exposé ci-dessus sont à la portée de l'homme du métier.

Un avantage de l'invention est que, sans nécessiter un recalcul de la table de correspondance 10 à chaque passage en premier plan d'une nouvelle application, on garantit qu'un code opératoire ne soit pas piraté alors qu'il est en arrière plan dans un traitement multitâches. Bien entendu, le contenu des lignes de la table 10 peut être écrasé au fur et à mesure de son remplissage, comme c'était le cas classiquement dans la solution exposée en relation avec la figure 4.

N'importe quel algorithme classique exécutant une fonction de type Hash peut être utilisé. Parmi les algorithmes connus, on citera, par exemple, l'algorithme connu sous la dénomination SHA-1 qui opère sur des blocs de 512 bits et fournit une signature de 160 bits en sortie. Pour l'application d'un tel algorithme, le code ou partie de code dont on souhaite obtenir une signature est découpé en blocs de 512 bits pour lesquels on calcule à chaque fois cinq mots de 32 bits concaténés correspondant à la signature du bloc. Dans ce cas, on peut utiliser, par exemple, un seul mot sur les cinq mots de 32 bits de la signature et additionner les premiers mots de plusieurs signatures calculées sur des blocs différents pour obtenir le code courant CURASID de l'application.

Bien entendu, la présente invention est susceptible de diverses variantes et modifications qui apparaîtront à l'homme de l'art. En particulier, le choix de l'algorithme de calcul de signature dépend préférentiellement de la taille des identifiants d'application utilisés dans la table de correspondance et du niveau de sécurité souhaité pour le système. De plus, la sélection des lignes de code opératoire à prendre en compte dans le calcul de signature est à la portée de l'homme du métier à partir des indications fonctionnelles données ci-dessus. Enfin, si une réalisation matérielle du calcul de signature est préférée, l'invention n'exclut pas une réalisation logicielle.

## Revendications

1. Procédé d'autorisation d'accès à une table de correspondance (10) d'adresses outre une unité centrale de traitement (1) multitâches et au moins une mémoire (4, 5) contenant plusieurs programmes, ladite table contenant des correspondances entre des adresses virtuelles (VirtaD) des lignes des différentes programmes et des adresses physiques (PhysaD) de ces lignes dans la mémoire, chaque correspondance étant associée à un identifiant (ASID) du programme concerné, **caractérisé en ce qu'**il comporte, à chaque changement de tâche de l'unité centrale par passage en premier plan d'un programme, des étapes de :
calcul (30) d'une signature courante (CURASID) d'au moins une partie des lignes d'instruction du programme ;
comparaison (32) de cette signature avec une signature (ASID) de référence enregistrée dans ladite table de correspondance (10) lors d'une exécution précédente du programme concerné à partir des mêmes lignes d'instructions et conditionnant l'identifiant, du programme ; et
autorisation d'accès à la table en cas d'identité entre les signatures.

2. Procédé selon la revendication 1, dans lequel ladite signature est calculée par la mise en oeuvre d'une fonction de Hash.

3. Procédé selon la revendication 1 ou 2, dans lequel ladite mémoire est une mémoire vive (4) dans laquelle sont chargées des lignes de programme depuis une mémoire de masse (5).

4. Processeur d'exécution multitâches de plusieurs programmes, exploitant une table de correspondance (10) entre des adresses virtuelles (VirtaD) des lignes des différents programmes et des adresses physiques (PhysaD) de ces lignes dans au moins une mémoire (4, 5), chaque correspondance étant associée à un identifiant (ASID) du programme concerné, **caractérisé en ce qu'**il comporte à chaque changement de tâche de l'unité centrale par passage en premier plan dudit programme:
des moyens de calcul (30) d'une signature courante (CURASID) d'au moins une partie des lignes d'instruction du programme ;
des moyens de comparaison (32) de cette signature courante (CURASID) par rapport à une signature de référence (ASID), identifiant du programme stocké dans la table de correspondance et calculé par un calcul de signature à partir des mêmes lignes d'instruction ; et
des moyens pour autoriser l'unité centrale à exécuter l'instruction du programme concerné en cas d'identité de la signature courante et de l'identifiant du programme.

## Claims

1. A method for authorizing an access to a table of address correspondence (10) between a multitask CPU (1) and at least one memory (4, 5) containing several programs, said table containing correspondences between virtual addresses (VirtaD) of the lines of the different programs and physical addresses (PhysaD) of said lines in the memory, each correspondence being associated with an identifier (ASID) of the involved program, **characterized in that** it comprises, on each task change of the CPU by passage to the foreground of the program, the steps of:
calculating (30) a current signature (CURASID) of at least part of the program instruction lines,
comparising (32) conformity of this signature with a reference signature (ASID) recorded in said table (10) upon previous execution of the involved program, from the same instruction lines and conditioning the program identifier; and
authorizing an access to the table if the signatures are identical.

2. The method of claim 1, wherein said signature is calculated by the implementation of a Hash function.

3. The method of claim 1 or 2, wherein said memory is a RAM (4) in which are loaded program lines from a mass storage (5).

4. A processor of multitask execution of several programs, exploiting a table of correspondence (10) between virtual addresses (VirtaD) of the lines of the different programs and physical addresses (PhysaD) of these lines in at least one memory (4, 5), each correspondence being associated with an identifier (ASID) of the involved program, **characterized in that** it comprises at each task change of the CPU by passage to the foreground of said program:
means (30) for calculating a current signature (CURASID) based on at least part of the program instruction lines,
means (32) for comparing this current signature (CURASID) with a reference signature (ASID) identifying the program stored in the correspondence table and calculated by a signature calculation from the same instruction lines; and
means for authorizing the CPU to execute the involved program instruction in case the signature is identical to the program identifier.

## Patentansprüche

1. Verfahren zur Authorisierung des Zugriffs auf eine Adressen-Korrespondenz-Tabelle (10) zwischen einer für Multitaskbetrieb ausgelegten Zentralen Verarbeitungseinheit (Zentraleinheit) CPU (1) und wenigstens einem mehrere Programme enthaltenden Speicher (4,5), wobei die Tabelle Korrespondenzen zwischen virtuellen Adressen (VirtaD der Zeilen der verschiedenen Programme und physischen Adressen (PhysaD) dieser Zeilen in dem Speicher enthält und wobei jede Korrespondenz jeweils einern. Identifikator (ASID) des betreffenden Programms zugeordnet ist, ***dadurch gekennzeichnet, dass*** das Verfahren zu jeder Task-Änderung der Zentraleinheit CPU durch Übergang des Programms in den Vordergrund Verfahrensschritte wie folgt umfasst:
Berechnen (30) einer laufenden aktuellen Signatur (CURASID) wenigstens eines Teils der Befehlszeilen des Programms;
Vergleichen (32) dieser Signatur mit einer Bezugssignatur (ASID), die in der genannten Kossespondenztabelle (10) bei einer vorhergehenden Ausführung des betreffenden Programms ausgehend von denselben Befehlszeilen aufgezeichnet wurde und den Identifikator des Programms konditioniert;
Authorisieren des Zugriffs auf die Tabelle im Falle der Identität zwischen den Signaturen.

2. Verfahren nach Anspruch 1, bei welchem die Berechnung der Signatur durch Implementierung einer Hash-Funktion erfolgt

3. Verfahren nach Anspruch 1 oder 2, bei welchem der genannte Speicher ein RAM-Speicher (4) ist, in welchen Programmzeilen aus einem Massespeicher (5) geladen werden.

4. Prozessor für die Ausführung mehrerer Programme im Multitask-Betrieb, unter Verwendung einer Korrespondenztabelle (10) zwischen virtuellen Adressen (VirtaD) der Zeilen der verschiedenen Programme und physischen Adressen (PhysaD) dieser Zeilen in wenigstens einem Speicher (4,5), wobei jede Korrespondenz einem Identifikator (ASID) des betreffenden Programms zugeordnet ist, ***dadurch gekennzeichnet, dass*** der Prozessor zu jeder Task-Änderung der Zentraleinheit durch Übergang des genannten Programms in den Vordergrund umfasst:
Mittel (30) zum Berechnen einer laufenden bzw aktuellen Signatur (CURASID) wenigstens eines Teils der Befehlszeilen des Programms;
Mittel (32) zum Vergleichen dieser laufenden bzw aktuellen Signatur (CURASID) mit einer Bezugssignatur (ASID), welche das in der Korrespondenztabelle gespeicherte Programm identifiziert und durch eine Signaturberechnung auf der Grundlage derselben Befehlszeilen berechnet ist;
Mittel, welche im Falle der Identität der laufenden Signatur und des Programm-Identifikators die Zentraleinheit zur Ausführung des Befehls des betreffenden Programms authorisieren.
